Europäisches Patentamt

(19) European Patent Office

Office européen des brevets

(11) Numéro de publication: **0 169 288**
**B1**

(12) **FASCICULE DE BREVET EUROPEEN**

(45) Date de publication du fascicule du brevet:
**28.12.88**

(21) Numéro de dépôt: **84402416.6**

(22) Date de dépôt: **27.11.84**

(51) Int. Cl.⁴: **G 01 D 3/04**

(54) **Dispositif de compensation en température d'un capteur et son procédé d'ajustage.**

(30) Priorité: **07.12.83 FR 8319549**

(43) Date de publication de la demande:
**29.01.86 Bulletin 86/5**

(45) Mention de la délivrance du brevet:
**28.12.88 Bulletin 88/52**

(84) Etats contractants désignés:
**DE GB IT SE**

(56) Documents cités:
**US-A- 4 000 643**

(73) Titulaire: **REGIE NATIONALE DES USINES RENAULT,
Boîte postale 103 8-10 avenue Emile Zola,
F-92109 Boulogne-Billancourt (FR)**

(72) Inventeur: **Hannoyer, Gilles, Les Clos du Bel-Air Rue
Taillevent, F-78100 Saint Germain en Laye (FR)**
Inventeur: **Lefevre, Eric, 1, Place Racine,
F-92100 Boulogne Billancourt (FR)**
Inventeur: **Le Caer, Raoul Résidence La Fontaine, Rue
des Tartres Bt. A Appartement 101, F-95240 Cormeilles
en Parisis (FR)**

EP 0 169 288 B1

# Description

La présente invention concerne un dispositif de compensation en température d'un capteur alimenté en courant continu et convertissant une grandeur physique en une tension continue, suivant lequel la résistance interne et la sensibilité du capteur varient dans des sens opposés en fonction de la température, ainsi qu'un procédé d'ajustage d'un tel dispositif de compensation.

De tels dispositifs sont connus qui utilisent un ou plusieurs composants externes sensibles à la température, par exemple une thermistance associée à une résistance, dont la résistivité en fonction de la température est adaptée aux caractéristiques préalablement déterminées du capteur pour compenser les variations de gain de celui-ci en fonction de la température.

Ces dispositifs de l'art antérieur sont peu commodes à mettre en œuvre car ils nécessitent de nombreux ajustages et manquent souvent de précision, lors des fonctionnements transitoires, à cause des composants externes qui présentent des temps de réponse en température différents de celui du capteur.

L'invention vise à éliminer ces inconvénients au moyen d'un dispositif qui soit simple à réaliser tout en étant précis et efficace.

A cet effet, elle a pour objet un dispositif de compensation en température d'un capteur alimenté en courant continu et convertissant une grandeur physique en une tension continue suivant lequel la résistance interne et la sensibilité du capteur varient dans des sens opposés en fonction de la température, ledit dispositif de compensation comprenant au moins un élément résistif associé au capteur, caractérisé en ce que l'élément résistif est une résistance fixe montée en parallèle avec le capteur et dont la valeur R est choisie telle que le coefficient en température de la sensibilité globale $\alpha$ du circuit comprenant la résistance montée en parallèle avec le capteur est égal en valeur absolue et de signe opposé au coefficient en température de la sensibilité du capteur $\alpha_s$, le dispositif de compensation comprenant également une source de courant constant alimentant ledit circuit parallèle et un pont diviseur de rapport K pour soustraire de la tension de sortie $V_d$ du capteur une fraction prédéterminée $V_{corr}$ de la tension $V_{cap}$ aux bornes du circuit parallèle. On constate que ce dispositif utilise directement comme information température, pour compenser la tension de sortie du capteur, les variations de tension à l'entrée du capteur alimenté à courant constant, variations qui sont corrigées par la résistance extérieure en parallèle. Il en résulte un montage particulièrement simple et précis en fonctionnement transitoire puisqu'on évite l'emploi d'une thermistance dont le temps de réponse en température peut difficilement être identique à celui du capteur.

L'invention a également pour objet un procédé d'ajustage du dispositif tel que défini ci-dessus, caractérisé en ce qu'on applique la tension de sortie $V_d$ du capteur entre les entrées négative et positive d'un amplificateur différentiel et on applique ladite fraction $V_{corr} = K\,V_{cap}$ de la tension $V_{cap}$ aux bornes du circuit parallèle à l'entrée négative dudit amplificateur, on règle initialement le rapport K du pont diviseur à la valeur zéro, on mesure la tension $V_{cap}$ aux bornes du circuit parallèle et la tension $V_s$ à la sortie de l'amplificateur respectivement à des températures $T_1$ et $T_2$ choisies en fonction des caractéristiques et de la zone de fonctionnement en température du capteur, on calcule un rapport K tel que:

$$K = \frac{V_{s\,(T_2)} - V_{s\,(T_1)}}{G\,[V_{cap\,(T_2)} - V_{cap\,(T_1)}]}\quad\text{où}$$

G est le gain de l'amplificateur, et on assigne au pont diviseur ladite valeur K calculée.

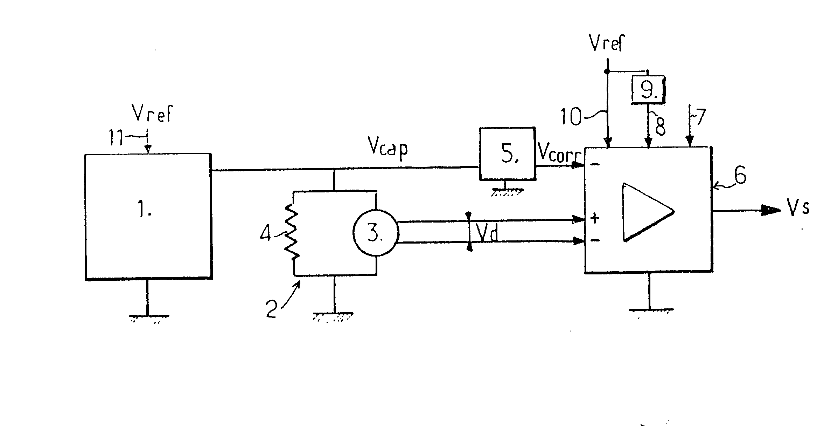

D'autres caractéristiques et avantages de l'invention ressortiront de la description qui va suivre d'un mode de sa réalisation donné uniquement à titre d'exemple et illustré par le dessin annexé sur lequel la figure unique est un schéma électrique d'un dispositif de compensation de température associé à un capteur.

En se référant à la figure unique, le dispositif comprend un générateur 1 de courant constant $I_o$ alimentant un circuit 2, constitué du montage en parallèle d'un capteur 3 et d'une résistance 4 de valeur ohmique R, ainsi qu'un circuit 5 représentant un pont diviseur de rapport K. Le capteur 3 peut être de type piézorésistif ou analogue, par exemple un capteur de pression du type MPX 100 de la Société Motorola.

La tension $V_{cap}$ développée aux bornes du circuit 2 et appliquée au circuit 5 est divisée dans le rapport K par ce dernier qui engendre une tension $V_{corr}$. La tension $V_{corr}$ est appliquée à l'entrée négative d'un amplificateur différentiel 6 du type opérationnel qui reçoit par ailleurs entre ses entrées négative et positive la tension différentielle de sortie $V_d$ du capteur 3. L'amplificateur différentiel 6 produit à sa sortie une tension $V_s$ qui représente la tension de sortie compensée en température du capteur 3. L'amplificateur 6 présente une entrée 7 de réglage de gain, une entrée 8 de réglage de zéro à laquelle la tension $V_{ref}$ est appliquée par l'intermédiaire d'un pont diviseur 9 de rapport $k_1$, et une entrée 10 d'alimentation à laquelle est appliquée la tension $V_{ref}$. Cette tension $V_{ref}$ sert également à alimenter le générateur 1 de courant constant par une entrée 11. Enfin, les circuits 1, 2, 5 et 6 sont connectés à la masse.

Le capteur 3 possède deux paramètres, à savoir une résistance interne $R_c$ et une sensibilité S en pression ou autre grandeur physique à mesurer, qui évoluent en fonction de la température de quantités non nécessairement égales mais en sens opposés. En fonctionnement, l'alimentation à courant constant du générateur 1 permet de sommer les variations de sens opposés et, par conséquent, de minimiser la dérive en température, puisque la perte de sensibilité du capteur est limitée par l'élévation de la tension d'alimentation due à l'élévation de la résistance $R_c$ avec la température.

D'autre part, la résistance 4, qui possède son propre coefficient de température, permet pour une certaine valeur ohmique de rendre les variations des deux paramètres égaux en valeurs absolues.

Si l'on désigne par:

$\alpha_r$ le coefficient en température de la résistance 4 en parallèle;
$\alpha_c$ le coefficient en température de la résistance interne du capteur 3;
$\alpha_s$ le coefficient en température de la sensibilité du capteur,

la valeur R de la résistance 4 permettant d'annuler les variations du premier ordre en température peut se calculer comme indiqué ci-après.

$\alpha$ étant le coefficient en température de la résistance globale du circuit 2 résultant de la mise en parallèle du capteur 3 avec la résistance 4, on a:

$$\alpha = \frac{\alpha_c\,R + \alpha_r\,R_c}{R + R_c},\ d'où$$

$$R = \frac{\alpha_r\,R_c - \alpha\,R_c}{(\alpha - \alpha_c)}$$

Si l'on suppose que les variations en température de la résistance globale du circuit 2 sont égales et de sens opposé aux variations en température de la sensibilité du capteur, on a:

$$\alpha = -\alpha_s,\ d'où$$

$$R = -R_c\frac{(\alpha_s + \alpha_r)}{(\alpha_s + \alpha_c)}$$

On décrira maintenant le procédé qui permet de choisir le rapport K de manière à minimiser l'erreur en fonction de la température de la relation entre la tension de sortie $V_s$ et la grandeur physique mesurée par le capteur 3, par exemple la pression.

Si on appelle G le gain de l'amplificateur 6 entre ses entrées $V_{corr}$ et $V_d$ d'une part et sa sortie $V_s$ d'autre part, on peut écrire:

$$V_s = G\,V_d - K\,G\,V_{cap} - V_o \qquad (1),$$

relation dans laquelle $V_o$ est la tension constante égale à $k_1V_{ref}$ appliquée à l'entrée 8 de l'amplificateur.

Si l'on choisit K = 0 et que l'on mesure la tension d'alimentation du capteur $V_{cap}$ et la tension de sortie $V_s$ de l'amplificateur 6 à une température $T_1$ puis à une température $T_2$, on dispose des valeurs $V_{s(T_1)}$, $V_{s(T_2)}$, $V_{cap(T_1)}$, $V_{cap(T_2)}$ qui sont liées par la relation:

$$V_{s\,(T_2)} - V_{s\,(T_1)} = G[V_{d\,(T_2)} - V_{d\,(T_1)}] \qquad (2)$$

Si l'on choisit maintenant une valeur de K pour laquelle la tension de sortie $V_s$ de l'amplificateur 6 est identique à la température $T_1$ et à la température $T_2$, on peut écrire:

$$G\,[V_{d(T_2)} - V_{d\,(T_1)}] - K\,G\,[V_{cap\,(T_2)} - V_{cap\,(T_1)}] = 0 \qquad (3)$$

En combinant (2) et (3), on obtient:

$$K = \frac{V_{s\,(T_2)} - V_{s\,(T_1)}}{G\,[V_{cap\,(T_2)} - V_{cap\,(T_1)}]} \qquad (4)$$

On constate que le procédé de détermination du rapport K est particulièrement simple puisqu'il consiste uniquement à mesurer initialement, pour un rapport K égal à zéro, les tensions $V_s$ et $V_{cap}$ à des températures $T_2$ et $T_1$, à calculer ensuite la valeur de K conformément à la formule (4), et à assigner au pont diviseur 5 la valeur K ainsi calculée.

Les températures $T_2$ et $T_1$ sont choisies en fonction des caractéristiques et de la zone de fonctionnement du capteur considéré de manière à minimiser l'erreur en fonction de la température dans cette zone de fonctionnement. C'est ainsi que, par exemple, dans le cas du capteur Motorola MPX 100 A précité, pour une zone de fonctionnement comprise entre 0 et 80°C, on choisira des températures $T_1$ et $T_2$ égales respectivement à 20°C et 60°C.

On notera par ailleurs qu'il est souhaitable de choisir le générateur de courant constant 1 de manière telle que les variations de la tension d'alimentation $V_{ref}$ entraînent des variations directement proportionnelles du courant $I_o$ fourni au circuit 2, c'est-à-dire que $V_{ref} = k_2\,I_o$. On réalise ainsi un dispositif de type ratiométrique, c'est-à-dire que les variations de $V_{ref}$ entraînent des variations directement proportionnelles de $V_s$. Si d'autres circuits d'exploitation de la tension $V_s$ sont disposés en aval du circuit décrit, il est alors aisé, en les alimentant avec la tension $V_{ref}$, de s'affranchir des erreurs que pourraient entraîner les variations de cette dernière.

Il ressort de ce qui précède que le dispositif et le procédé de réglage décrits peuvent être appliqués industriellement en grande série puisqu'ils ne nécessitent le réglage que du paramètre K, la valeur R de la résistance 4 étant définie pour un type de capteur 3 donné.

## Revendications

1. Dispositif de compensation en température d'un capteur alimenté en courant continu et convertissant une grandeur physique en une tension continue suivant lequel la résistance interne et la sensibilité du capteur varient dans des sens opposés en fonction de la température, ledit dispositif de compensation comprenant au moins un élément résistif associé au capteur, caractérisé en ce que l'élément résistif (4) est une résistance fixe montée en parallèle avec le capteur et dont la valeur R est choisie telle que le coefficient en température de la sensibilité globale α du circuit comprenant la résistance (4) montée en parallèle avec le capteur (3) est égal en valeur absolue et de signe opposé au coefficient en température de la sensibilité du capteur $\alpha_s$, le dispositif de compensation comprenant également une source de courant constant (1) alimentant ledit circuit parallèle (2) et un pont diviseur (5) de rapport K pour soustraire de la tension de sortie $V_d$ du capteur (3) une fraction prédéterminée $V_{corr}$ de la tension $V_{cap}$ aux bornes du circuit parallèle (2).

2. Dispositif selon la revendication 1, caractérisé en ce que la valeur ohmique R de la résistance (4) est choisie telle que:

$$R = -R_c \frac{(\alpha_s + \alpha_r)}{(\alpha_s + \alpha_c)},$$

relation dans laquelle:
- $R_c$ est la résistance interne du capteur;
- $\alpha_r$ est le coefficient en température de la résistance fixe (4);
- $\alpha_c$ est le coefficient en température de la résistance interne $R_c$ du capteur (3);
- $\alpha_s$ est le coefficient en température de la sensibilité du capteur (3).

3. Dispositif selon l'une quelconque des revendications 1 et 2, caractérisé en ce que la tension de sortie $V_d$ du capteur (3) est appliquée entre les entrées négative et positive d'un amplificateur opérationnel (6) de type différentiel et la fraction $V_{corr} = K V_{cap}$ de la tension $V_{cap}$ aux bornes du circuit parallèle (2) est appliquée à l'entrée négative dudit amplificateur (6).

4. Dispositif selon la revendication 3, caractérisé en ce que le courant $I_o$ délivré par la source (1) et la tension $V_o$ de réglage de zéro de l'amplificateur (6) sont directement proportionnels à une tension de référence $V_{ref}$.

5. Dispositif selon l'une quelconque des revendications 3 et 4, caractérisé en ce que le rapport K a pour valeur:

$$K = \frac{V_{s(T_2)} - V_{s(T_1)}}{G[V_{cap(T_2)} - V_{cap(T_1)}]} \text{ où}$$

- G est le gain de l'amplificateur (6);
- $V_{s(T_2)}$, $V_{s(T_1)}$, $V_{cap(T_2)}$, $V_{cap(T_1)}$ représentent les tensions à la sortie de l'amplificateur (6) et aux bornes du circuit parallèle (2) mesurées respectivement à des températures $T_2$ et $T_1$ pour une valeur du rapport K égale à zéro.

6. Procédé d'ajustage d'un dispositif selon l'une quelconque des revendications 1 à 5, caractérisé en ce qu'on applique la tension de sortie $V_d$ du capteur entre les entrées négative et positive d'un amplificateur différentiel (6) et on applique ladite fraction $V_{corr} = K V_{cap}$ de la tension $V_{cap}$ aux bornes du circuit parallèle (2) à l'entrée négative dudit amplificateur (6), on règle initialement le rapport K du pont diviseur (5) à la valeur zéro, on mesure la tension $V_{cap}$ aux bornes du circuit parallèle (2) et la tension $V_s$ à la sortie de l'amplificateur (6) respectivement à des températures $T_1$ et $T_2$ choisies en fonction des caractéristiques et de la zone de fonctionnement en température du capteur, on calcule un rapport K tel que:

$$K = \frac{V_{s(T_2)} - V_{s(T_1)}}{G[V_{cap(T_2)} - V_{cap(T_1)}]} \text{ où}$$

G est le gain de l'amplificateur (6), et on assigne au pont diviseur (5) ladite valeur K calculée.

## Patentansprüche

1. Temperaturkompensationseinrichtung für einen Sensor, der mit Gleichstrom gespeist wird und eine physikalische Grösse in eine Gleichspannung umwandelt, wobei der Innenwiderstand und die Empfindlichkeit des Sensors in entgegengesetzte Richtungen variieren als Funktion der Temperatur, wobei die Kompensationseinrichtung wenigstens ein Widerstandselement aufweist, das mit dem Sensor verbunden ist, dadurch gekennzeichnet, dass das Widerstandselement (4) ein fester Widerstand ist, der parallel zum Sensor geschaltet ist und dessen Wert R derart gewählt ist, dass der Temperaturkoeffizient der gesamten Empfindlichkeit α des Schaltkreises, der den parallel zum Sensor (3) geschalteten Widerstand (4) aufweist, den gleichen Absolutwert und entgegengesetztes Vorzeichen aufweist zum Temperaturkoeffizienten der Empfindlichkeit des Sensors $\alpha_s$ und dass die Kompensationseinrichtung ausserdem eine konstante Gleichstromquelle (1) aufweist, die den parallelen Schaltkreis (2) speist, sowie eine Teilerbrücke (5) mit dem Verhältnis K aufweist, um von der Ausgangsspannung $V_d$ des Sensors (3) einen vorgegebenen Bruchteil $V_{corr}$ der Spannung $V_{cap}$ an den Anschlüssen der Parallelschaltung (2) abzuziehen.

2. Einrichtung nach Anspruch 1, dadurch gekennzeichnet, dass der Ohmsche Wert R des Widerstands (4) derart gewählt ist, dass die Beziehung erfüllt ist

$$R = R_c \frac{(\alpha_s + \alpha_r)}{(\alpha_s + \alpha_c)},$$

wobei
- $R_c$ der Innenwiderstand des Sensors ist;
- $\alpha_r$ der Temperaturkoeffizient des festen Widerstandes (4) ist;
- $\alpha_c$ der Temperaturkoeffizient des Innenwiderstands $R_c$ des Sensors (3) ist und
- $\alpha_s$ der Temperaturkoeffizient der Empfindlichkeit des Sensors (3) ist.

3. Einrichtung nach einem der Ansprüche 1 und 2, dadurch gekennzeichnet, dass die Ausgangsspannung $V_d$ des Sensors (3) an die negativen und positiven Eingänge eines differentiellen Operationsverstärkers (6) angelegt wird und die Spannung $V_{corr} = K V_{cap}$ der Spannung $V_{cap}$ an den Anschlüssen der Parallelschaltung (2) am negativen Eingang des Verstärkers (6) angelegt wird.

4. Einrichtung nach Anspruch 3, dadurch gekennzeichnet, dass der von der Quelle (1) gelieferte Strom $I_0$ und die Spannung $V_0$ zur Nullstellung des Verstärkers (6) direkt proportional zu einer Referenzspannung $V_{ref}$ sind.

5. Einrichtung nach einem der Ansprüche 3 und 4, dadurch gekennzeichnet, dass das Verhältnis K den folgenden Wert aufweist:

$$K = \frac{V_{s(T_2)} - V_{s(T_1)}}{G\left[V_{cap(T_2)} - V_{cap(T_1)}\right]},$$

wobei
– G die Verstärkung des Verstärkers (6) ist;
– $V_{s(T_2)}$, $V_{s(T_1)}$, $V_{cap(T_2)}$, $V_{cap(T_1)}$ die Ausgangsspannungen am Verstärker (6) und den Anschlüssen der Parallelschaltung (2) darstellen, die bei den Temperaturen $T_2$ bzw. $T_1$ für einen Wert des Verhältnisses K von Null gemessen sind.

6. Verfahren zum Einstellen einer Vorrichtung nach einem der Ansprüche 1 bis 5, dadurch gekennzeichnet, dass die Ausgangsspannung $V_d$ des Sensors an die negativen und positiven Eingänge eines Differentialverstärkers (6) angelegt wird und dass der Bruchteil $V_{corr} = K V_{cap}$ der Spannung $V_{cap}$ an den Anschlüssen der Parallelschaltung (2) an den negativen Eingang des Verstärkers (6) angelegt wird, dass zuerst das Verhältnis K der Teilerbrücke (5) auf den Wert Null eingestellt wird, dass die Spannung $V_{cap}$ an den Anschlüssen der Parallelschaltung (2) gemessen wird sowie die Spannung $V_s$ am Ausgang des Verstärkers (6) bei der Temperatur $T_1$ bzw. $T_2$ als Funktion der Eigenschaften und des Temperatur-Einsatzbereiches des Sensors und dass das Verhältnis K derart berechnet wird, dass folgende Beziehung erfüllt ist:

$$K = \frac{V_{s(T_2)} - V_{s(T_1)}}{G\left[V_{cap(T_2)} - V_{cap(T_1)}\right]},$$

wobei G die Verstärkung des Verstärkers (6) ist, wonach der Teilerbrücke (5) dieser berechnete Wert K zugeordnet wird.

## Claims

1. An arrangement for compensation in respect of temperature of a sensor which is supplied with direct current, for converting a physical parameter into a dc voltage, wherein the internal resistance and the sensitivity of the sensor vary in opposite directions in dependence on temperature, said compensation arrangement comprising at least one resistive element associated with the sensor, characterised in that the resistive element (4) is a fixed resistor mounted in parallel with the sensor and whose value R is so selected that the coefficient in respect of temperature of the overall sensitivity $\alpha$ of the circuit comprising the resistor (4) connected in parallel with the sensor (3) is equal in absolute value and of opposite sign to the temperature coefficient of the sensitivity of the sensor $\alpha_s$, the compensation arrangement also comprising a direct current source (1) for feeding said parallel circuit (2) and a divider bridge (5) with a ratio K for subtracting from the output voltage $V_d$ of the sensor (3) a predetermined fraction $V_{corr}$ of the voltage $V_{cap}$ at the terminals of the parallel circuit (2).

2. An arrangement according to claim 1, characterised in that the ohmic value R of the resistor (4) is so selected that:

$$R = R_c \frac{(\alpha_s + \alpha_r)}{(\alpha_s + \alpha_c)}$$

in which relationship:
– $R_c$ is the internal resistance of the sensor; .
– $\alpha_r$ is the coefficient in respect of temperature of the fixed resistor (4);
– $\alpha_c$ is the coefficient in respect of temperature of the internal resistance $R_c$ of the sensor (3); and
– $\alpha_s$ is the coefficient in respect of temperature of the sensitivity of the sensor (3).

3. An arrangement according to either one of claims 1 and 2, characterised in that the output voltage $V_d$ of the sensor (3) is applied across the negative and positive inputs of an operational amplifier (6) of differential type and the fraction $V_{corr} = K V_{cap}$ of the voltage $V_{cap}$ at the terminals of the parallel circuit (2) is applied to the negative input of said amplifier (6).

4. An arrangement according to claim 3, characterised in that the current $I_o$ delivered by the source (1) and the zero setting voltage $V_o$ of the amplifier (6) are directly proportional to a reference voltage $V_{ref}$.

5. An arrangement according to either one of claims 3 and 4 characterised in that the ratio K is of the following value:

$$K = \frac{V_{s(t_2)} - V_{s(t_1)}}{G\left[V_{cap(T_2)} - V_{cap(T_1)}\right]}$$

wherein
– G is the gain of the amplifier (6);
– $V_{s(T_2)}$, $V_{s(T_1)}$, $V_{cap(T_2)}$, $V_{cap(T_1)}$ represent the voltages at the output of the amplifier (6) and at the terminals of the parallel circuit (2) which are measured respectively at temperatures $T_2$ and $T_1$ for a value of the ratio K which is equal to zero.

6. A process for adjusting an arrangement according to any one of claims 1 to 5 characterised by applying the output voltage $V_d$ of the sensor across the negative and positive inputs of a differential amplifier (6) and applying said fraction $V_{corr} = K V_{cap}$ of the voltage $V_{cap}$ at the terminals of the parallel circuit (2) to the negative input of said amplifier (6), initially setting the ratio K of the divider bridge (5) to the value zero, measuring the voltage $V_{cap}$ at the terminals of the parallel circuit (2) and the voltage $V_s$ at the output of the amplifier (6) respectively at temperatures $T_1$ and $T_2$ which are selected in dependence on the characteristics and the range of operation in respect of temperature of the sensor, calculating a ratio K

such that:

$$K = \frac{V_{s(T_2)} - V_{s(T_1)}}{G\,[V_{cap(T_2)} - V_{cap(T_1)}]}$$

wherein G is the gain of the amplifier (6), and assigning said calculated value K to the divider bridge (5).

Vref

11

1.

Vcap

4

2

3.

Vd

5. Vcorr

Vref

9.

10

8

7

6

−

+

+

−

Vs

EP 0 169 288 B1